# EUROPEAN PATENT APPLICATION

(11) **EP 4 773 284 A1**
(43) Date of publication of application: **08.07.2026**
(21) Application number: 25864975.5
(22) Date of filing: 01.07.2025
(51) Int. Cl.: H01M 10/0525, H01M 4/02, H01M 4/131

(54) **ELECTROCHEMICAL DEVICE AND ELECTRONIC DEVICE COMPRISING SAME**

(30) Priority: 12.09.2024 CN 202411280300
(71) Applicant: Ningde Amperex Technology Limited, Ningde, Fujian 352100 (CN)
(72) Inventor: WU, Jian, Ningde, Fujian 352100 (CN)
(74) Representative: Kraus & Lederer PartGmbB
(86) International application number: PCT/CN2025/106440
(87) International publication number: WO 2026/056476

(57) **Abstract**

This application provides an electrochemical device and an electronic device containing same. The electrochemical device includes a positive electrode plate. The positive electrode plate includes a current collector and a positive electrode material layer located on at least one surface of the current collector in a thickness direction of the current collector. The positive electrode material layer includes a first positive electrode material layer and a second positive electrode material layer. The second positive electrode material layer is located between the first positive electrode material layer and the current collector. The positive electrode material layer includes a positive active material. The positive active material includes two or more lithium nickel cobalt manganese oxide ternary materials. The two or more lithium nickel cobalt manganese oxide ternary materials are divided into two groups, with a first group of lithium nickel cobalt manganese oxide ternary materials being represented by a chemical formula Liₙ₁Niₓ₁Co_{y1}Mn_{z1}M1ₘ₁O₂, satisfying x1 + y1 + z1 + m1 = 1 and 0.15 ≤ y1 ≤ 0.60, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14. The two groups of lithium nickel cobalt manganese oxide ternary materials are located in the first positive electrode material layer and the second positive electrode material layer respectively. The positive electrode plate meets the above characteristics, thereby improving the discharge performance of the electrochemical device at a low temperature and a low SOC.

## Description

This application claims priority to Chinese Patent Application No. 202411280300.X, filed with China National Intellectual Property Administration on September 12, 2024 and entitled "ELECTROCHEMICAL DEVICE AND ELECTRONIC DEVICE CONTAINING SAME", which is incorporated herein by reference in its entirety.

### TECHNICAL FIELD

This application relates to the field of electrochemical technology, and in particular, to an electrochemical device and an electronic device containing same.

### BACKGROUND

Positive active materials of a lithium-ion battery include a lithium nickel cobalt manganese oxide (NCM) ternary material, lithium cobalt oxide, and the like. A lithium battery that uses an NCM ternary material as a positive active material exhibits the advantages of low cost, high gravimetric capacity, and high safety.

However, currently, an NCM lithium battery quickly reaches a discharge cutoff voltage (3.0 V) when discharging at a low temperature and a low state of charge (SOC). The discharge performance at a low temperature and a low SOC can hardly meet the application requirements of actual products. A lithium battery that uses lithium cobalt oxide as a positive electrode material can meet the requirement of discharging at a low temperature and a low SOC, but the lithium cobalt oxide material requires the consumption of cobalt metal resources that are scarcer, resulting in higher cost and hindering cost reduction.

### SUMMARY

An objective of this application is to provide an electrochemical device and an electronic device containing same to improve the discharge performance of the electrochemical device at a low temperature and a low SOC. Specific technical solutions are as follows:

A first aspect of this application provides an electrochemical device. The electrochemical device includes a positive electrode plate. The positive electrode plate includes a current collector and a positive electrode material layer located on at least one surface of the current collector in a thickness direction of the current collector. The positive electrode material layer includes a first positive electrode material layer and a second positive electrode material layer. The second positive electrode material layer is located between the first positive electrode material layer and the current collector. The positive electrode material layer includes a positive active material. The positive active material includes two or more lithium nickel cobalt manganese oxide ternary materials. The two or more lithium nickel cobalt manganese oxide ternary materials are divided into two groups, with a first group of lithium nickel cobalt manganese oxide ternary materials being represented by a chemical formula Liₙ₁Niₓ₁Co_{y1}Mn_{z1}M1ₘ₁O₂, satisfying x1 + y1 + z1 + m1 = 1 and 0.15 ≤ y1 ≤ 0.60, preferably 0.15 ≤ y1 ≤ 0.45, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14, preferably 0 < y2 ≤ 0.08. The two groups of lithium nickel cobalt manganese oxide ternary materials are located in the first positive electrode material layer and the second positive electrode material layer respectively. By controlling the structure of the positive electrode material layer and the type and content of the positive active material to fall within the ranges specified herein, this application can improve the discharge performance of the electrochemical device at a low temperature and a low SOC.

In an embodiment of this application, the lithium nickel cobalt manganese oxide ternary material may include a doping element or a coating element, and materials of M1 and M2 each are independently at least one selected from Ag, Sn, Zn, Al, Mo, Cu, B, Ti, or Fe. The doping element or coating element added in the positive active material, on the one hand, makes a conductive network denser on the surface of particles of the positive active material and makes the kinetic performance higher; on the other hand, reduces a specific surface area of the positive active material, and reduces side reactions between the positive active material and an electrolyte solution; and further, is beneficial to forming a passivation film on the surface of the particles of the positive active material, and improves the first-cycle Coulombic efficiency and reversible capacity of the material. It is noted that m1 and m2 in LiₙiNiₓ₁Co_{y1}Mn_{z1}M1ₘ₁O₂ and Liₙ₂Niₓ₂Co_{y2}Mn_{z2}M2ₘ₂O₂ may be 0, meaning that the lithium nickel cobalt manganese oxide ternary material may include neither doping element nor coating element.

In an embodiment of this application, the first group of lithium nickel cobalt manganese oxide ternary materials is located in the first positive electrode material layer. The second group of lithium nickel cobalt manganese oxide ternary materials is located in the second positive electrode material layer. Based on a total mass of the lithium nickel cobalt manganese oxide ternary materials, a mass percentage of the first group of lithium nickel cobalt manganese oxide ternary materials is al, and a mass percentage of the second group of lithium nickel cobalt manganese oxide ternary materials is b1, satisfying 5% ≤ a1 ≤ 70%, and 30% ≤ b1 ≤ 95%, preferably 25% ≤ a1 ≤ 65% and 35% ≤ b1 ≤ 75%, and more preferably 40% ≤ a1 ≤ 60% and 40% ≤ b1 ≤ 60%. By controlling the type of material in the positive electrode material layer and the mass percentage of the lithium nickel cobalt manganese oxide ternary materials with different cobalt contents to fall within the ranges specified herein, this application can improve the discharge performance of the electrochemical device at a low temperature and a low SOC.

In an embodiment of this application, the second group of lithium nickel cobalt manganese oxide ternary materials is located in the first positive electrode material layer. The first group of lithium nickel cobalt manganese oxide ternary materials is located in the second positive electrode material layer. Based on a total mass of the lithium nickel cobalt manganese oxide ternary materials, a mass percentage of the first group of lithium nickel cobalt manganese oxide ternary materials is a2, and a mass percentage of the second group of lithium nickel cobalt manganese oxide ternary materials is b2, satisfying 25% ≤ a2 ≤ 95%, and 5% ≤ b2 ≤ 75%, preferably 35% ≤ a2 ≤ 80% and 20% ≤ b2 ≤ 65%, and more preferably 45% ≤ a2 ≤ 65% and 35% ≤ b2 ≤ 55%. By controlling the type of material in the positive electrode material layer and the mass percentage of the lithium nickel cobalt manganese oxide ternary materials with different cobalt contents to fall within the ranges specified herein, this application can improve the discharge performance of the electrochemical device at a low temperature and a low SOC.

In an embodiment of this application, a coating weight of the positive electrode material layer is 6 mg/cm² to 11 mg/cm². By controlling the coating weight of the positive electrode material layer to fall within the range specified herein, this application can improve the discharge performance of the electrochemical device at a low temperature and a low SOC.

In an embodiment of this application, a particle diameter of the first group of lithium nickel cobalt manganese oxide ternary materials is D_{V1}50, satisfying 1 µm ≤ D_{V1}50 ≤ 10 µm, and preferably 2 µm ≤ D_{V1}50 ≤ 9 µm. By controlling the particle diameter of the lithium nickel cobalt manganese oxide ternary materials to fall within the range specified herein, this application improves the lithium-ion transmission distance during charging and discharging of the electrochemical device, thereby prolonging the discharge time of the battery in a low-temperature environment.

In an embodiment of this application, a particle diameter of the second group of lithium nickel cobalt manganese oxide ternary materials is D_{V2}50, satisfying 1 µm ≤ D_{V2}50 ≤ 15 µm, and optionally 2 µm ≤ D_{V2}50 ≤ 10 µm. By controlling the particle diameter of the lithium nickel cobalt manganese oxide ternary materials to fall within the range specified herein, this application can improve the lithium-ion transmission distance during charging and discharging of the electrochemical device, thereby prolonging the discharge time of the electrochemical device in a low-temperature environment.

In an embodiment of this application, the first group of lithium nickel cobalt manganese oxide ternary materials is represented by a chemical formula Liₙ₁Niₓ₁Co_{y1}Mn_{z1}M1ₘ₁O₂, where 0.95 ≤ n1 ≤ 1.05, 0.3 ≤ x1 ≤ 0.84, and 0.01 ≤ z1 ≤ 0.7, and 0 ≤ m1 ≤ 0.2. The second group of lithium nickel cobalt manganese oxide ternary materials is represented by a chemical formula Liₙ₂Niₓ₂Co_{y2}Mn_{z2}M2ₘ₂O₂, where 0.95 ≤ n2 ≤ 1.05, 0.3 ≤ x2 ≤ 0.9, 0.01 ≤ z2 ≤ 0.7, and 0 ≤ m2 ≤ 0.2. By controlling the types of the two groups of lithium nickel cobalt manganese oxide ternary materials to fall within the above ranges, this application reduces the impedance of the electrochemical device while increasing the discharge voltage plateau of the electrochemical device, thereby improving the discharge capability of the electrochemical device in a low-temperature environment.

In an embodiment of this application, the positive active material includes two lithium nickel cobalt manganese oxide ternary materials NCM-1 and NCM-2. NCM-1 satisfies 0.15 ≤ y1 ≤ 0.60, and NCM-2 satisfies 0 < y2 ≤ 0.14. By controlling the cobalt content y in the lithium nickel cobalt manganese oxide ternary materials to fall within the range specified herein, and the two types of lithium nickel cobalt manganese oxide ternary materials are preferably employed, this application reduces the impedance of the electrochemical device while increasing the discharge voltage plateau of the battery, thereby improving the discharge capability of the battery in a low-temperature environment.

In an embodiment of this application, based on a mass of the positive electrode material layer, a mass percentage of the lithium nickel cobalt manganese oxide ternary material is 90% to 98%. By controlling the mass percentage of the lithium nickel cobalt manganese oxide ternary material to fall within the range specified herein, this application improves the energy density and stability of the electrochemical device, thereby enhancing the discharge performance of the electrochemical device at a low temperature and a low SOC.

In an embodiment of this application, the positive electrode material layer further includes a conductive agent and a binder. The conductive agent is made of a material including one or more selected from the group consisting of conductive carbon black, carbon fiber, graphene, and carbon nanotubes. The binder is made of a material including one or more selected from the group consisting of polyacrylate, polyimide, polyamide, polyamide-imide, polyvinylidene fluoride, poly(styrene-co-butadiene), sodium alginate, polyvinyl alcohol, polytetrafluoroethylene, polyacrylonitrile, sodium carboxymethyl cellulose, potassium carboxymethyl cellulose, sodium hydroxymethyl cellulose, and potassium hydroxymethyl cellulose. By using the above binder, this application provides good adhesion between the positive electrode material layer and the positive current collector, thereby improving the discharge performance of the electrochemical device.

In an embodiment of this application, based on a mass of the positive electrode material layer, a mass percentage of the conductive agent is 1% to 8%, and a mass percentage of the binder is 1% to 3%. By controlling the mass percentage of the binder to fall within the above range, this application provides good adhesion between the positive electrode material layer and the positive current collector, thereby improving the discharge performance of the electrochemical device.

A second aspect of this application provides a method for preparing the electrochemical device disclosed in any one of the above embodiments.

The method includes: preparing the positive electrode plate: dividing the two groups of lithium nickel cobalt manganese oxide ternary materials into two groups of positive active materials, with a first group of lithium nickel cobalt manganese oxide ternary materials being represented by a chemical formula Liₙ₁Niₓ₁Co_{y1}Mn_{z1}M1ₘ₁O₂, satisfying x1 + y1 + z1 + m1 = 1 and 0.15 ≤ y1 ≤ 0.60, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14; and disposing the two groups of positive active materials into the first positive electrode material layer and the second positive electrode material layer respectively to obtain the positive electrode plate. By controlling the preparation method of the electrochemical device to fall within the above range, this application enables good operating performance of the electrochemical device provided herein.

A third aspect of this application provides an electronic device. The electronic device includes the electrochemical device disclosed in any one of the above embodiments.

Some of the beneficial effects of this application are as follows:
This application provides an electrochemical device. The electrochemical device includes a positive electrode plate. The positive electrode plate includes a current collector and a positive electrode material layer located on at least one surface of the current collector in a thickness direction of the current collector. The positive electrode material layer includes a first positive electrode material layer and a second positive electrode material layer. The second positive electrode material layer is located between the first positive electrode material layer and the current collector. The positive electrode material layer includes a positive active material. The positive active material includes two or more lithium nickel cobalt manganese oxide ternary materials. The two or more lithium nickel cobalt manganese oxide ternary materials are divided into two groups, with a first group of lithium nickel cobalt manganese oxide ternary materials being represented by a chemical formula Liₙ₁Niₓ₁Co_{y1}Mn_{z1}M1ₘ₁O₂, satisfying x1 + y1 + z1 + m1 = 1 and 0.15 ≤ y1 ≤ 0.60, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14. The two groups of lithium nickel cobalt manganese oxide ternary materials are located in the first positive electrode material layer and the second positive electrode material layer respectively. By controlling the structure of the positive electrode material layer and the type and content of the positive active material to fall within the ranges specified herein, this application can improve the discharge performance of the electrochemical device at a low temperature and a low SOC.

Definitely, a single product or method in which the technical solution of this application is implemented does not necessarily achieve all of the above advantages concurrently.

### DETAILED DESCRIPTION

To make the objectives, technical solutions, and advantages of this application clearer, the following describes this application in more detail with reference to embodiments. Evidently, the described embodiments are merely a part of but not all of the embodiments of this application. All other embodiments derived by a person skilled in the art based on this application still fall within the protection scope of this application.

It is noted that in specific embodiments of this application, this application is construed by using a lithium-ion battery as an example of the electrochemical device, but the electrochemical device according to this application is not limited to the lithium-ion battery. Specific technical solutions are as follows:
This application provides an electrochemical device. The electrochemical device includes a positive electrode plate. The positive electrode plate includes a current collector and a positive electrode material layer located on at least one surface of the current collector in a thickness direction of the current collector. The positive electrode material layer includes a first positive electrode material layer and a second positive electrode material layer. The second positive electrode material layer is located between the first positive electrode material layer and the current collector. The positive electrode material layer includes a positive active material. The positive active material includes two or more lithium nickel cobalt manganese oxide ternary materials. The two or more lithium nickel cobalt manganese oxide ternary materials are divided into two groups, with a first group of lithium nickel cobalt manganese oxide ternary materials being represented by a chemical formula Liₙ₁Niₓ₁Co_{y1}Mn_{z1}M1ₘ₁O₂, satisfying x1 + y1 + z1 + m1 = 1 and 0.15 ≤ y1 ≤ 0.60, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14, preferably 0.15 ≤ y1 ≤ 0.45 and 0 < y2 ≤ 0.08. As an example, y1 may be 0.15, 0.20, 0.25, 0.30, 0.35, 0.40, 0.45, 0.50, 0.55, 0.60, or a value falling within a range formed by any two thereof; and y2 may be 0.01, 0.02, 0.04, 0.06, 0.08, 0.10, 0.12, 0.14, or a value falling within a range formed by any two thereof. The two groups of lithium nickel cobalt manganese oxide ternary materials are located in the first positive electrode material layer and the second positive electrode material layer respectively.

Through research, the applicant hereof finds that, in the case that the lithium nickel cobalt manganese oxide ternary material is used as a positive active material, the electrochemical device quickly reaches a discharge cutoff voltage (3.0 V) when discharging at a low temperature and a low SOC. The discharge performance at a low temperature and a low SOC can hardly meet the application requirements of actual products. Typically, a lithium cobalt oxide material is used in place of the lithium nickel cobalt manganese oxide ternary material to meet the performance requirement of discharging at a low temperature and a low SOC, but the lithium cobalt oxide material requires the consumption of cobalt metal resources that are scarcer, resulting in higher cost and hindering cost reduction. When the cobalt content in the lithium nickel cobalt manganese oxide ternary materials is relatively high (for example, 0.15 ≤ y ≤ 0.60), the discharge voltage of the ternary material is lower, and the discharge curve is flatter. Conversely, when the cobalt content in the lithium nickel cobalt manganese oxide ternary materials is relatively low (for example, 0 < y ≤ 0.14), the discharge voltage of the ternary material is higher, and the slope of the discharge curve is steeper. Two or more types of lithium nickel cobalt manganese oxide ternary materials falling within the above ranges are divided into two groups. During preparation of the positive electrode material, the two groups of positive active materials are applied as two layers onto the positive electrode plate. Therefore, the positive electrode plate is characterized by both a high discharge voltage and a flat discharge curve, thereby improving the low-temperature discharge capability of the electrochemical device. Increasing the cobalt content in the ternary material can reduce the impedance of the electrochemical device while lowering the discharge voltage plateau. A lower impedance helps prolong the low-temperature discharge time of the electrochemical device, but a lower discharge voltage shortens the low-temperature discharge time of the electrochemical device. Therefore, the cobalt content may be set to fall within a preferred range based on experimental results. By controlling the structure of the positive electrode material layer and the type and content of the positive active material to fall within the ranges specified herein, this application enables the two types of lithium nickel cobalt manganese oxide ternary materials to contain an appropriate cobalt content and work synergistically. Therefore, the electrochemical device is characterized by both a high discharge voltage and a flat discharge curve, thereby improving the discharge performance of the electrochemical device at a low temperature and a low SOC.

In an embodiment of this application, the lithium nickel cobalt manganese oxide ternary material may include a doping element or a coating element, and materials of M1 and M2 each are independently at least one selected from Ag, Sn, Zn, Al, Mo, Cu, B, Ti, or Fe. The doping element or coating element added in the positive active material, on the one hand, makes a conductive network denser on the surface of particles of the positive active material and makes the kinetic performance higher; on the other hand, reduces a specific surface area of the positive active material, and reduces side reactions between the positive active material and an electrolyte solution; and further, is beneficial to forming a passivation film on the surface of the particles of the positive active material, and improves the first-cycle Coulombic efficiency and reversible capacity of the material. It is noted that m1 and m2 in Liₙ₁Niₓ₁Co_{y1}Mn_{z1}M1ₘ₁O₂ and Liₙ₂Niₓ₂Co_{y2}Mn_{z2}M2ₘ₂O₂ may be 0, meaning that the lithium nickel cobalt manganese oxide ternary material may include neither doping element nor coating element.

In an embodiment of this application, the first group of lithium nickel cobalt manganese oxide ternary materials is located in the first positive electrode material layer. The second group of lithium nickel cobalt manganese oxide ternary materials is located in the second positive electrode material layer. Based on a total mass of the lithium nickel cobalt manganese oxide ternary materials, a mass percentage of the first group of lithium nickel cobalt manganese oxide ternary materials is al, and a mass percentage of the second group of lithium nickel cobalt manganese oxide ternary materials is b1, satisfying 5% ≤ a1 ≤ 70%, and 30% ≤ b1 ≤ 95%, preferably 25% ≤ a1 ≤ 65% and 35% ≤ b1 ≤ 75%, and more preferably 40% ≤ a1 ≤ 60% and 40% ≤ b1 ≤ 60%. As an example, the value of a1 may be 5%, 10%, 15%, 20%, 25%, 30%, 35%, 40%, 45%, 50%, 55%, 60%, 65%, 70%, or a value falling within a range formed by any two thereof; and b1 may be 30%, 35%, 40%, 45%, 50%, 55%, 60%, 65%, 70%, 75%, 80%, 85%, 90%, 95%, or a value falling within a range formed by any two thereof. By controlling the type of material in the positive electrode material layer and the mass percentage of the lithium nickel cobalt manganese oxide ternary materials with different cobalt contents to fall within the ranges specified herein, this application can improve the discharge performance of the electrochemical device at a low temperature and a low SOC.

In an embodiment of this application, the second group of lithium nickel cobalt manganese oxide ternary materials is located in the first positive electrode material layer. The first group of lithium nickel cobalt manganese oxide ternary materials is located in the second positive electrode material layer. Based on a total mass of the lithium nickel cobalt manganese oxide ternary materials, a mass percentage of the first group of lithium nickel cobalt manganese oxide ternary materials is a2, and a mass percentage of the second group of lithium nickel cobalt manganese oxide ternary materials is b2, satisfying 25% ≤ a2 ≤ 95%, and 5% ≤ b2 ≤ 75%, preferably 35% ≤ a2 ≤ 80% and 20% ≤ b2 ≤ 65%, and more preferably 45% ≤ a2 ≤ 65% and 35% ≤ b2 ≤ 55%. As an example, the value of a2 may be 25%, 30%, 35%, 40%, 45%, 50%, 55%, 60%, 65%, 70%, 75%, 80%, 85%, 90%, 95%, or a value falling within a range formed by any two thereof; and b2 may be 5%, 10%, 15%, 20%, 25%, 30%, 35%, 40%, 45%, 50%, 55%, 60%, 65%, 70%, 75%, or a value falling within a range formed by any two thereof. By controlling the type of material in the positive electrode material layer and the mass percentage of the lithium nickel cobalt manganese oxide ternary materials with different cobalt contents to fall within the ranges specified herein, this application can improve the discharge performance of the electrochemical device at a low temperature and a low SOC.

In an embodiment of this application, a coating weight of the positive electrode material layer is 6 mg/cm² to 11 mg/cm². By controlling the coating weight of the positive electrode material layer to fall within the range specified herein, this application can improve the accuracy of the areal density of the coating layer and the uniformity of coating, thereby improving the energy density, cycle stability, and safety of the electrochemical device.

In an embodiment of this application, the particle diameter of the first group of lithium nickel cobalt manganese oxide ternary materials is D_{V1}50, satisfying 1 µm ≤ D_{V1}50 ≤ 10 µm, preferably 2 µm ≤ Dᵥ₁50 ≤ 9 µm. As an example, D_{V1}50 may be 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, or a value falling within a range formed by any two thereof. The particle diameter of the second group of lithium nickel cobalt manganese oxide ternary materials is D_{V2}50, satisfying 1 µm ≤ D_{V2}50 ≤ 15 µm, preferably 2 µm ≤ D_{V2}50 ≤ 10 µm. As an example, D_{V2}50 may be 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, or a value falling within a range formed by any two thereof. The particle diameter of lithium nickel cobalt manganese oxide ternary materials affects the lithium-ion transmission distance during charging and discharging of the electrochemical device. The greater the transmission distance, the shorter the discharge time at a low temperature. By controlling the particle diameter of the lithium nickel cobalt manganese oxide ternary materials to fall within the range specified herein, this application can improve the lithium-ion transmission distance during charging and discharging of the electrochemical device, thereby prolonging the discharge time of the electrochemical device in a low-temperature environment.

In an embodiment of this application, the first group of lithium nickel cobalt manganese oxide ternary materials is represented by a chemical formula Liₙ₁Niₓ₁Co_{y1}Mn_{z1}M1ₘ₁O₂, where 0.95 ≤ n1 ≤ 1.05, 0.3 ≤ x1 ≤ 0.84, and 0.01 ≤ z1 ≤ 0.7, and 0 ≤ m1 ≤ 0.2. The second group of lithium nickel cobalt manganese oxide ternary materials is represented by a chemical formula Liₙ₂Niₓ₂Co_{y2}Mn_{z2}M2ₘ₂O₂, where 0.95 ≤ n2 ≤ 1.05, 0.3 ≤ x2 ≤ 0.9, 0.01 ≤ z2 ≤ 0.7, and 0 ≤ m2 ≤ 0.2. By controlling the types of the two groups of lithium nickel cobalt manganese oxide ternary materials to fall within the above ranges, this application reduces the impedance of the electrochemical device while increasing the discharge voltage plateau of the electrochemical device, thereby improving the discharge capability of the electrochemical device in a low-temperature environment.

In an embodiment of this application, the positive active material includes two types of lithium nickel cobalt manganese oxide ternary materials. Based on the cobalt content y, the ternary materials are divided into two groups: NCM-1 and NCM-2. NCM-1 satisfies: 0.15 ≤ y1 ≤ 0.60. As an example, y1 may be 0.15, 0.20, 0.25, 0.30, 0.35, 0.40, 0.45, 0.50, 0.55, 0.60, or a value falling within a range formed by any two thereof. NCM-2 satisfies: 0 < y2 ≤ 0.14. As an example, y2 may be 0.01, 0.02, 0.04, 0.06, 0.08, 0.10, 0.12, 0.14, or a value falling within a range formed by any two thereof. By controlling the cobalt content y in the lithium nickel cobalt manganese oxide ternary materials to fall within the range specified herein, and the two types of lithium nickel cobalt manganese oxide ternary materials are preferably employed, this application reduces the impedance of the electrochemical device while increasing the discharge voltage plateau of the electrochemical device, thereby improving the discharge capability of the electrochemical device in a low-temperature environment and simplifying the production process.

In an embodiment of this application, based on a mass of the positive electrode material layer, a mass percentage of the lithium nickel cobalt manganese oxide ternary material is 90% to 98%. Specifically, the mass percentage of the lithium nickel cobalt manganese oxide ternary material may be 90%, 91%, 92%, 93%, 94%, 95%, 96%, 97%, 98%, or a value falling within a range formed by any two thereof. By controlling the content of the lithium nickel cobalt manganese oxide ternary materials to fall within the above ranges, this application can improve the discharge performance of the electrochemical device at a low temperature and a low SOC.

In this application, the method for preparing the lithium nickel cobalt manganese oxide ternary material is not particularly limited herein, as long as the objectives of this application can be achieved. For example, the ternary material may be prepared using the following method:
Co-precipitating a Ni, Co, and Mn nitrate, sulfate, or chloride under the action of ammonia or an ammonium bicarbonate complexing agent to prepare an NCM carbonate or hydroxide precursor, and then sintering the precursor together with lithium hydroxide or lithium carbonate at a high temperature of 700 °C to 1000 °C to obtain a lithium nickel cobalt manganese oxide ternary material.

In this application, the positive electrode material layer further includes a conductive agent and a binder. The conductive agent is made of a material including one or more selected from the group consisting of conductive carbon black, carbon fiber, graphene, and carbon nanotubes. As an example, the conductive carbon black may include, but is not limited to, at least one of acetylene black or Ketjen black; and the carbon nanotubes may include, but are not limited to, single-walled carbon nanotubes and/or multi-walled carbon nanotubes. The binder may be made of a material including one or more selected from the group consisting of polyacrylate, polyimide, polyamide, polyamide-imide, polyvinylidene fluoride, poly(styrene-co-butadiene), sodium alginate, polyvinyl alcohol, polytetrafluoroethylene, polyacrylonitrile, sodium carboxymethyl cellulose, potassium carboxymethyl cellulose, sodium hydroxypropyl cellulose, and potassium hydroxypropyl cellulose.

In an embodiment of this application, based on the mass of the positive electrode material layer, the mass percentage of the conductive agent is 1% to 8%. As an example, the mass percentage of the conductive agent may be 1%, 1.5%, 2%, 2.5%, 3%, 3.5%, 4%, 4.5%, 5%, 5.5%, 6%, 6.5%, 7%, 7.5%, 8%, or a value falling within a range formed by any two thereof. The mass percentage of the binder is 1% to 3%. As an example, the mass percentage of the binder may be 1%, 1.2%, 1.4%, 1.6%, 1.8%, 2%, 2.2%, 2.4%, 2.6%, 2.8%, 3%, or a value falling within a range formed by any two thereof. By controlling the type and content of the conductive agent and the binder to fall within the above ranges, this application can improve the discharge performance of the electrochemical device at a low temperature and a low SOC.

The positive electrode plate of this application further includes a positive current collector. The positive current collector is not particularly limited herein, as long as the objectives of this application can be achieved. For example, the positive current collector may include aluminum foil, aluminum alloy foil, a composite current collector (for example, an aluminum-carbon composite current collector), or the like.

The thicknesses of the positive current collector and positive electrode material layer are not particularly limited herein, as long as the objectives of this application can be achieved. For example, the thickness of the positive current collector is 5 µm to 20 µm, and the thickness of the positive electrode material layer is 30 µm to 120 µm.

In this application, the electrochemical device further includes a negative electrode plate. The negative electrode plate includes a negative current collector and a negative electrode material layer disposed on at least one surface of the negative current collector. "The negative electrode material layer is disposed on at least one surface of the negative current collector" means that the negative electrode material layer may be disposed on one surface of the negative current collector or on both surfaces of the negative current collector along the thickness direction of the current collector. It is noted that the "surface" here may be the entire surface region of the negative current collector, or a partial surface region of the negative current collector, without being particularly limited herein, as long as the objectives of the application can be achieved.

The negative current collector is not particularly limited herein, as long as the objectives of this application can be achieved. For example, the negative current collector may include copper foil, copper alloy foil, nickel foil, stainless steel foil, titanium foil, foamed nickel, foamed copper, or composite current collector. As an example, the composite current collector may be a lithium-copper composite current collector, a carbon-copper composite current collector, a nickel-copper composite current collector, or a titanium-copper composite current collector.

The negative electrode material layer includes a negative active material. The negative active material is not particularly limited herein, as long as the objectives of this application can be achieved. For example, the negative active material may include, but is not limited to, at least one of natural graphite, artificial graphite, mesocarbon microbeads, hard carbon, soft carbon, silicon, a silicon-carbon composite, Li-Sn alloy, Li-Sn-O alloy, Sn, SnO, SnO₂, spinel-structured lithiated TiO₂-Li₄Ti₅O₁₂, or Li-Al alloy.

In some embodiments of this application, the negative electrode material layer may further include a conductive agent and a binder. The types of the conductive agent and the binder are not particularly limited herein, as long as the objectives of this application can be achieved. For example, the conductive agent and binder may be at least one of the above-mentioned conductive agents and binders. The mass ratio between the negative active material, the conductive agent, and the binder in the negative electrode material layer is not particularly limited herein, and may be selected by a person skilled in the art as actually required, as long as the objectives of this application can be achieved.

The thickness of the negative electrode material layer is not particularly limited herein, as long as the objectives of this application can be achieved. For example, the thickness of the negative electrode material layer is 30 µm to 120 µm.

The thickness of the negative current collector is not particularly limited herein, as long as the objectives of this application can be achieved. For example, the thickness of the negative current collector is 4 µm to 15 µm.

Optionally, the negative electrode plate may further include a conductive layer. The conductive layer is located between the negative current collector and the negative electrode material layer. The constituents of the conductive layer are not particularly limited herein, and the conductive layer may be a conductive layer commonly used in the art. For example, the conductive layer includes a conductive agent and a binder. The conductive agent and binder in the conductive layer are not particularly limited herein. For example, the conductive agent and binder may be at least one of the conductive agents and binders enumerated above.

In this application, the electrochemical device further includes a separator. The separator is not particularly limited herein, as long as the objectives of this application can be achieved. For example, the separator may be made of a material including but not limited to at least one of: a polyethylene (PE)- or polypropylene (PP)-based polyolefin (PO), a polyester (such as polyethylene terephthalate (PET) film), cellulose, polyimide (PI), polyamide (PA), spandex, or aramid. The type of the separator may include a woven film, a nonwoven film, a microporous film, a composite film, a calendered film, or a spinning film.

In some embodiments of this application, the separator may include a substrate layer and a surface treatment layer. The substrate layer may be a nonwoven fabric, film, or composite film, which, in each case, assumes a porous structure. The material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film.

Optionally, the surface treatment layer is disposed on at least one surface of the substrate layer. The surface treatment layer may be a polymer layer or an inorganic compound layer, or a layer compounded of a polymer and an inorganic compound.

In some embodiments of this application, the inorganic compound layer includes inorganic particles and a binder. The inorganic particles are not particularly limited herein. For example, the inorganic particles may include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited herein. For example, the binder may be at least one of the above-mentioned binders. In some embodiments of this application, the polymer layer includes a polymer. The material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-co-hexafluoropropylene).

In this application, the thickness of the separator is not particularly limited herein, as long as the objectives of this application can be achieved. For example, the thickness of the separator may be 3 µm to 30 µm.

A second aspect of this application provides a method for preparing the electrochemical device disclosed in any one of the above embodiments. The method includes: dividing the two groups of lithium nickel cobalt manganese oxide ternary materials into two groups of positive active materials, with a first group of lithium nickel cobalt manganese oxide ternary materials being represented by a chemical formula Liₙ₁Niₓ₁Co_{y1}Mn_{z1}M1ₘ₁O₂, satisfying x1 + y1 + z1 + m1 = 1 and 0.15 ≤ y1 ≤ 0.60, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14; and disposing the two groups of positive active materials into the first positive electrode material layer and the second positive electrode material layer respectively to obtain the positive electrode plate. By controlling the preparation method of the electrochemical device to fall within the above range, this application simplifies the preparation process, and enables good discharge performance of the electrochemical device of this application at a low temperature and a low SOC.

A third aspect of this application provides an electronic device. The electronic device includes the electrochemical device disclosed in any one of the above embodiments. The electronic device provided in this application exhibits good operating performance. The type of the electronic device is not particularly limited herein, and may be any electronic device known in the prior art. In some embodiments, the types of the electronic device may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

### Embodiments

The implementations of this application are described below in more detail with reference to some embodiments and comparative embodiments. Various tests and evaluations are performed by the following methods. In addition, unless otherwise specified, the word "parts" means parts by mass, and the symbol "%" means a percentage by mass.

### Test methods and devices

### Test of cobalt content

Using scanning electron microscope (SEM), selecting NCM material particles, and performing elemental analysis on the selected NCM particles using an energy-dispersive X-ray spectrometer (EDS). It is noted that the EDS test yields the mass of each element. To obtain the molar mass of atoms of each element, calculation needs to be performed using the following formula: n' = m'/M', where n' is the molar mass of atoms of each element, m' is the mass of each element measured by EDS, and M' is the molar mass of each element. Therefore, the molar mass of cobalt atoms in the lithium nickel cobalt manganese oxide ternary material is n'(Co) = m'(Co)/M'(Co).

### Test of the content of each component in the positive electrode material layer

Calcining the prepared positive electrode plate at 500 °C for 4 hours under an oxygen-rich high-temperature condition to remove carbon-containing conductive agent and organic binder components from the electrode plate. Dispersing the powder subjected to the high-temperature treatment evenly in water, and taking 1 mL of the resulting suspension, oven-drying the suspension to prepare a specimen. Observing the specimen at a 1000x magnification using SEM and EDS. Performing statistics of the components and the number of all NCM particles in a random field of view, and performing statistics of the content of each component based on the type of the component and the number of particles.

### Particle size test

Oven-drying the above suspension to prepare a specimen. Observing the specimen using SEM and EDS, and performing statistics of the particle diameter in addition to the components and the number of particles, so as to obtain the D_{V}50 of each different component.

### Test of low-temperature discharge performance

Performing a discharge test on a battery at a low temperature and a low SOC: Discharging the battery at a rate of 0.2C until the voltage reaches 3.0 V, and then charging the battery at a rate of 0.2C for 0.5 hour. Placing the battery in a 0 °C low-temperature environment, and discharging the battery at a rate of 1C and a rate of 0.5C separately. Recording the duration of discharge to 3.0 V.

### Embodiment 1-1

### <Preparation of a positive electrode plate>

Mixing LiNi_{0.5}Co_{0.4}Mn_{0.09}Al_{0.01}O₂ with conductive carbon black (Super P), CNTs, and polyvinylidene fluoride (PVDF) at a mass ratio of 96.5:1.0:1.0:1.5. Adding N-methylpyrrolidone (NMP) as a solvent to formulate a slurry in which the solid content is 75 wt%, and stirring well to obtain a first positive electrode slurry. Mixing LiNi_{0.5}Co_{0.05}Mn_{0.44}Al_{0.01}O₂ with conductive carbon black (Super P), CNTs, and PVDF at a mass ratio of 96.5:1.0:1.0:1.5. Adding NMP as a solvent to formulate a slurry in which the solid content is 75 wt%, and stirring well to obtain a second positive electrode slurry. Applying the first positive electrode slurry to the first positive electrode material layer, and applying the second positive electrode slurry to the second positive electrode material layer. Spreading the first positive electrode material layer and the second positive electrode material layer onto one surface of 10 µm-thick positive current collector aluminum foil at a ratio of 40%:60%, with a coating weight of 8 mg/cm² as a positive electrode material layer on the positive electrode plate. Oven-drying the foil at 90 °C to obtain a positive electrode plate coated with a positive electrode material layer on a single side. Subsequently, repeating the above steps on the other surface of the aluminum foil to obtain a positive electrode plate coated with the positive electrode material layer on both sides. Cold-pressing the positive electrode plate after completion of the coating, where the compaction density is 4.1 g/cm³. Cutting the electrode plate and welding a tab to obtain a positive electrode plate of 74 mm × 867 mm in size for further use.

### <Preparation of a negative electrode plate>

Mixing artificial graphite as a negative active material, conductive carbon black (Super P), and polyacrylic acid at a mass ratio of 97.3:1.5:1.2, and adding deionized water (H₂O) as a solvent to formulate a slurry in which the solid content is 70 wt%, and stirring well to obtain a negative electrode slurry. Applying the negative electrode slurry evenly onto one surface of 10 µm-thick negative current collector copper foil such that the coating weight of the negative electrode material layer on the negative electrode plate is 95 g/m². Drying the foil at 110 °C to obtain a negative electrode plate coated with a negative electrode material layer on a single side. Subsequently, repeating the above steps on the other surface of the copper foil to obtain a negative electrode plate coated with the negative electrode material layer on both sides. Cold-pressing the negative electrode plate after completion of the coating, where the compaction density is 1.7 g/cm³. Performing cutting and tab welding to obtain a negative electrode plate of 78 mm × 875 mm in size for future use. By adjusting the ball-milling time, the negative active material artificial graphite is caused to possess a Dv50 of 10 µm and a specific surface area of 1.6 m²/g.

### <Preparation of an electrolyte solution>

Mixing ethylene carbonate (EC), ethyl methyl carbonate (EMC), and diethyl carbonate (DEC) thoroughly at a mass ratio of 3:5:2 in an argon atmosphere glovebox with a water content less than 10 ppm to obtain a base solvent, and then adding hexafluorophosphate (LiPF₆) as a lithium salt into the base solvent, and stirring well to obtain an electrolyte solution. Based on the mass of the electrolyte solution, the mass percentage of the lithium salt is 12.5%, and the remainder is the base solvent.

### <Separator>

Using a 9 µm-thick polyethylene film as a separator.

### <Preparation of a lithium-ion battery>

Stacking the positive electrode plate, the separator, and the negative electrode plate sequentially such that the separator is located between the positive electrode plate and the negative electrode plate to serve a separation function, and then winding the stacked structure to obtain an electrode assembly. Placing the electrode assembly into outer package foil, injecting the above-prepared electrolyte solution, and performing steps such as formation, degassing, and edge trimming to obtain a lithium-ion battery.

### Embodiments 1-2 to 1-40

Identical to Embodiment 1-1 except that the preparation parameters are changed according to Table 1.

### Embodiment 1-41

Mixing LiNi_{0.5}Co_{0.4}Mn_{0.09}Al_{0.01}O₂ and LiNi_{0.4}Co_{0.5}Mn_{0.09}Al_{0.01}O₂ (at a mass ratio of 1:1) with conductive carbon black (Super P), CNTs, and polyvinylidene fluoride (PVDF) at a mass ratio of 96.5:1.0:1.0:1.5. Adding N-methylpyrrolidone (NMP) as a solvent to formulate a slurry in which the solid content is 75 wt%, and stirring well to obtain a first positive electrode slurry. Mixing LiNi_{0.5}Co_{0.05}Mn_{0.44}Al_{0.01}O₂ with conductive carbon black (Super P), CNTs, and PVDF at a mass ratio of 96.5:1.0:1.0:1.5, and adding NMP as a solvent to formulate a slurry in which the solid content is 75 wt%, and stirring well to obtain a second positive electrode slurry. Applying the first positive electrode slurry onto the first positive electrode material layer, and applying the second positive electrode slurry onto the second positive electrode material layer. Spreading the first positive electrode material layer and the second positive electrode material layer onto one surface of 10 µm-thick positive current collector aluminum foil at a ratio of 40%:60% such that the coating weight of the positive electrode material layer on the positive electrode plate is 8 mg/cm². Drying the foil at 90 °C to obtain a positive electrode plate coated with the positive electrode material layer on a single side. Subsequently, repeating the above steps on the other surface of the aluminum foil to obtain a positive electrode plate coated with the positive electrode material layer on both sides. Cold-pressing the positive electrode plate after completion of the coating, where the compaction density is 4.1 g/cm³. Cutting the electrode plate and welding a tab to obtain a positive electrode plate of 74 mm × 867 mm in size for further use.

### Embodiment 1-42

Mixing LiNi_{0.5}Co_{0.4}Mn_{0.09}Al_{0.01}O₂ with conductive carbon black (Super P), CNTs, and polyvinylidene fluoride (PVDF) at a mass ratio of 96.5:1.0:1.0:1.5. Adding N-methylpyrrolidone (NMP) as a solvent to formulate a slurry in which the solid content is 75 wt%, and stirring well to obtain a first positive electrode slurry. Mixing LiNi_{0.5}Co_{0.05}Mn_{0.44}Al_{0.01}O₂ and LiNi_{0.5}Co_{0.1}Mn_{0.39}Al_{0.01}O₂ (at a mass ratio of 1:1) with conductive carbon black (Super P), CNTs, and PVDF at a mass ratio of 96.5:1.0:1.0:1.5, and adding NMP as a solvent to formulate a slurry in which the solid content is 75 wt%, and stirring well to obtain a second positive electrode slurry. Applying the first positive electrode slurry onto the first positive electrode material layer, and applying the second positive electrode slurry onto the second positive electrode material layer. Spreading the first positive electrode material layer and the second positive electrode material layer onto one surface of 10 µm-thick positive current collector aluminum foil at a ratio of 40%:60% such that the coating weight of the positive electrode material layer on the positive electrode plate is 8 mg/cm². Drying the foil at 90 °C to obtain a positive electrode plate coated with the positive electrode material layer on a single side. Subsequently, repeating the above steps on the other surface of the aluminum foil to obtain a positive electrode plate coated with the positive electrode material layer on both sides. Cold-pressing the positive electrode plate after completion of the coating, where the compaction density is 4.1 g/cm³. Cutting the electrode plate and welding a tab to obtain a positive electrode plate of 74 mm × 867 mm in size for further use.

### Embodiment 1-43

Mixing LiNi_{0.5}Co_{0.4}Mn_{0.09}Al_{0.01}O₂ and LiNi_{0.4}Co_{0.5}Mn_{0.09}Al_{0.01}O₂ (at a mass ratio of 1:1) with conductive carbon black (Super P), CNTs, and polyvinylidene fluoride (PVDF) at a mass ratio of 96.5:1.0:1.0:1.5. Adding N-methylpyrrolidone (NMP) as a solvent to formulate a slurry in which the solid content is 75 wt%, and stirring well to obtain a first positive electrode slurry. Mixing LiNi_{0.5}Co_{0.05}Mn_{0.44}Al_{0.01}O₂ and LiNi_{0.5}Co_{0.1}Mn_{0.39}Al_{0.01}O₂ (at a mass ratio of 1:1) with conductive carbon black (Super P), CNTs, and PVDF at a mass ratio of 96.5:1.0:1.0:1.5, and adding NMP as a solvent to formulate a slurry in which the solid content is 75 wt%, and stirring well to obtain a second positive electrode slurry. Applying the first positive electrode slurry onto the first positive electrode material layer, and applying the second positive electrode slurry onto the second positive electrode material layer. Spreading the first positive electrode material layer and the second positive electrode material layer onto one surface of 10 µm-thick positive current collector aluminum foil at a ratio of 40%:60% such that the coating weight of the positive electrode material layer on the positive electrode plate is 8 mg/cm². Drying the foil at 90 °C to obtain a positive electrode plate coated with the positive electrode material layer on a single side. Subsequently, repeating the above steps on the other surface of the aluminum foil to obtain a positive electrode plate coated with the positive electrode material layer on both sides. Cold-pressing the positive electrode plate after completion of the coating, where the compaction density is 4.1 g/cm³. Cutting the electrode plate and welding a tab to obtain a positive electrode plate of 74 mm × 867 mm in size for further use.

### Comparative Embodiments 1 to 3

Identical to Embodiment 1-1 except that the preparation parameters are changed according to Table 1.

**Table 1 (To be continued)**

| Group | n1 | n2 | x1 | x2 | y1 | y2 | z1 | z2 | m1 | m2 | a1 | b1 | a2 | b2 |
|---|---|---|---|---|---|---|---|---|---|---|---|---|---|---|
| Embodiment 1-1 | 1 | 1 | 0.50 | 0.50 | 0.40 | 0.05 | 0.09 | 0.44 | 0.01 | 0.01 | 40% | 60% | \ | \ |
| Embodiment 1-2 | 1 | 1 | 0.50 | 0.50 | 0.40 | 0.02 | 0.09 | 0.47 | 0.01 | 0.01 | 40% | 60% | \ | \ |
| Embodiment 1-3 | 1 | 1 | 0.50 | 0.50 | 0.40 | 0.08 | 0.09 | 0.41 | 0.01 | 0.01 | 40% | 60% | \ | \ |
| Embodiment 1-4 | 1 | 1 | 0.50 | 0.50 | 0.40 | 0.10 | 0.09 | 0.39 | 0.01 | 0.01 | 40% | 60% | \ | \ |
| Embodiment 1-5 | 1 | 1 | 0.50 | 0.50 | 0.40 | 0.14 | 0.09 | 0.35 | 0.01 | 0.01 | 40% | 60% | \ | \ |
| Embodiment 1-6 | 1 | 1 | 0.33 | 0.50 | 0.60 | 0.14 | 0.06 | 0.35 | 0.01 | 0.01 | 40% | 60% | \ | \ |
| Embodiment 1-7 | 1 | 1 | 0.33 | 0.50 | 0.60 | 0.05 | 0.06 | 0.44 | 0.01 | 0.01 | 40% | 60% | \ | \ |
| Embodiment 1-8 | 1 | 1 | 0.50 | 0.50 | 0.45 | 0.05 | 0.04 | 0.44 | 0.01 | 0.01 | 40% | 60% | \ | \ |
| Embodiment 1-9 | 1 | 1 | 0.50 | 0.50 | 0.30 | 0.05 | 0.19 | 0.44 | 0.01 | 0.01 | 40% | 60% | \ | \ |
| Embodiment 1-10 | 1 | 1 | 0.50 | 0.50 | 0.15 | 0.05 | 0.34 | 0.44 | 0.01 | 0.01 | 40% | 60% | \ | \ |
| Embodiment 1-11 | 1 | 1 | 0.50 | 0.50 | 0.15 | 0.01 | 0.34 | 0.48 | 0.01 | 0.01 | 40% | 60% | \ | \ |
| Embodiment 1-12 | 1 | 1 | 0.50 | 0.50 | 0.40 | 0.05 | 0.09 | 0.44 | 0.01 | 0.01 | 5% | 95% | \ | \ |
| Embodiment 1-13 | 1 | 1 | 0.50 | 0.50 | 0.40 | 0.05 | 0.09 | 0.44 | 0.01 | 0.01 | 70% | 30% | \ | \ |
| Embodiment 1-14 | 1 | 1 | 0.50 | 0.50 | 0.40 | 0.05 | 0.09 | 0.44 | 0.01 | 0.01 | 25% | 75% | \ | \ |
| Embodiment 1-15 | 1 | 1 | 0.50 | 0.50 | 0.40 | 0.05 | 0.09 | 0.44 | 0.01 | 0.01 | 60% | 40% | \ | \ |
| Embodiment 1-16 | 1 | 1 | 0.50 | 0.50 | 0.40 | 0.05 | 0.09 | 0.44 | 0.01 | 0.01 | 65% | 35% | \ | \ |
| Embodiment 1-17 | 1 | 1 | 0.50 | 0.50 | 0.40 | 0.05 | 0.09 | 0.44 | 0.01 | 0.01 | \ | \ | 25% | 75% |
| Embodiment 1-18 | 1 | 1 | 0.50 | 0.50 | 0.40 | 0.05 | 0.09 | 0.44 | 0.01 | 0.01 | \ | \ | 35% | 65% |
| Embodiment 1-19 | 1 | 1 | 0.50 | 0.50 | 0.40 | 0.05 | 0.09 | 0.44 | 0.01 | 0.01 | \ | \ | 45% | 55% |
| Embodiment 1-20 | 1 | 1 | 0.50 | 0.50 | 0.40 | 0.05 | 0.09 | 0.44 | 0.01 | 0.01 | \ | \ | 65% | 35% |
| Embodiment 1-21 | 1 | 1 | 0.50 | 0.50 | 0.40 | 0.05 | 0.09 | 0.44 | 0.01 | 0.01 | \ | \ | 80% | 20% |
| Embodiment 1-22 | 1 | 1 | 0.50 | 0.50 | 0.40 | 0.05 | 0.09 | 0.44 | 0.01 | 0.01 | \ | \ | 95% | 5% |
| Embodiment 1-23 | 1 | 1 | 0.50 | 0.50 | 0.40 | 0.05 | 0.09 | 0.44 | 0.01 | 0.01 | 40% | 60% | \ | \ |
| Embodiment 1-24 | 1 | 1 | 0.50 | 0.50 | 0.40 | 0.05 | 0.09 | 0.44 | 0.01 | 0.01 | 40% | 60% | \ | \ |
| Embodiment 1-25 | 1 | 1 | 0.50 | 0.50 | 0.40 | 0.05 | 0.09 | 0.44 | 0.01 | 0.01 | 40% | 60% | \ | \ |
| Embodiment 1-26 | 1 | 1 | 0.50 | 0.50 | 0.40 | 0.05 | 0.09 | 0.44 | 0.01 | 0.01 | 40% | 60% | \ | \ |
| Embodiment 1-27 | 1 | 1 | 0.50 | 0.50 | 0.40 | 0.05 | 0.09 | 0.44 | 0.01 | 0.01 | 40% | 60% | \ | \ |
| Embodiment 1-28 | 1 | 1 | 0.50 | 0.50 | 0.40 | 0.05 | 0.09 | 0.44 | 0.01 | 0.01 | 40% | 60% | \ | \ |
| Embodiment 1-29 | 1 | 1 | 0.50 | 0.50 | 0.40 | 0.05 | 0.09 | 0.44 | 0.01 | 0.01 | 40% | 60% | \ | \ |
| Embodiment 1-30 | 1 | 1 | 0.50 | 0.50 | 0.40 | 0.05 | 0.09 | 0.44 | 0.01 | 0.01 | 40% | 60% | \ | \ |
| Embodiment 1-31 | 1 | 1 | 0.50 | 0.50 | 0.40 | 0.05 | 0.09 | 0.44 | 0.01 | 0.01 | 40% | 60% | \ | \ |
| Embodiment 1-32 | 1 | 1 | 0.50 | 0.50 | 0.40 | 0.05 | 0.09 | 0.44 | 0.01 | 0.01 | 40% | 60% | \ | \ |
| Embodiment 1-33 | 1 | 1 | 0.50 | 0.50 | 0.40 | 0.05 | 0.09 | 0.44 | 0.01 | 0.01 | 40% | 60% | \ | \ |
| Embodiment 1-34 | 1 | 1 | 0.50 | 0.50 | 0.40 | 0.05 | 0.09 | 0.44 | 0.01 | 0.01 | 40% | 60% | \ | \ |
| Embodiment 1-35 | 1 | 1 | 0.50 | 0.50 | 0.40 | 0.05 | 0.09 | 0.44 | 0.01 | 0.01 | 40% | 60% | \ | \ |
| Embodiment 1-36 | 1 | 1 | 0.50 | 0.50 | 0.40 | 0.05 | 0.09 | 0.44 | 0.01 | 0.01 | 40% | 60% | \ | \ |
| Embodiment 1-37 | 1 | 1 | 0.50 | 0.50 | 0.40 | 0.05 | 0.09 | 0.44 | 0.01 | 0.01 | 3% | 97% | \ | \ |
| Embodiment 1-38 | 1 | 1 | 0.50 | 0.50 | 0.40 | 0.05 | 0.09 | 0.44 | 0.01 | 0.01 | 75% | 25% | \ | \ |
| Embodiment 1-39 | 1 | 1 | 0.50 | 0.50 | 0.40 | 0.05 | 0.09 | 0.44 | 0.01 | 0.01 | \ | \ | 15% | 85% |
| Embodiment 1-40 | 1 | 1 | 0.50 | 0.50 | 0.40 | 0.05 | 0.09 | 0.44 | 0.01 | 0.01 | \ | \ | 97% | 3% |
| Comparative Embodiment 1 | 1 | 1 | 0.20 | 0.50 | 0.70 | 0.20 | 0.09 | 0.29 | 0.01 | 0.01 | 40% | 60% | \ | \ |
| Comparative Embodiment 2 | 1 | 1 | 0.50 | 0.50 | 0.40 | 0.20 | 0.09 | 0.29 | 0.01 | 0.01 | 40% | 60% | \ | \ |
| Comparative Embodiment 3 | 1 | 1 | 0.20 | 0.50 | 0.70 | 0.05 | 0.09 | 0.44 | 0.01 | 0.01 | 40% | 60% | \ | \ |

**Table 1 (Continued)**

| Group | NCM-1 | NCM-2 | Content of CNT | Content of SP | 0 °C 0.5C discharge time | 0 °C 1C discharge time |
|---|---|---|---|---|---|---|
| | D_{V1}50 | D_{V2}50 | | | | |
| Embodiment 1-1 | 5 | 5 | 1% | 1% | 6 min 40 s | 2 min 27 s |
| Embodiment 1-2 | 5 | 5 | 1% | 1% | 6 min 42 s | 2 min 29 s |
| Embodiment 1-3 | 5 | 5 | 1% | 1% | 6 min 35 s | 2 min 23 s |
| Embodiment 1-4 | 5 | 5 | 1% | 1% | 6 min 30 s | 2 min 19 s |
| Embodiment 1-5 | 5 | 5 | 1% | 1% | 6 min 10 s | 2 min 01 s |
| Embodiment 1-6 | 5 | 5 | 1% | 1% | 5 min 49 s | 1 min 41 s |
| Embodiment 1-7 | 5 | 5 | 1% | 1% | 6 min 10 s | 1 min 53 s |
| Embodiment 1-8 | 5 | 5 | 1% | 1% | 6 min 25 s | 1 min 58 s |
| Embodiment 1-9 | 5 | 5 | 1% | 1% | 6 min 28 s | 2 min |
| Embodiment 1-10 | 5 | 5 | 1% | 1% | 6 min 24 s | 1 min 55 s |
| Embodiment 1-11 | 5 | 5 | 1% | 1% | 5 min 8 s | 1 min 27 s |
| Embodiment 1-12 | 5 | 5 | 1% | 1% | 4 min 56 s | 1 min 12 s |
| Embodiment 1-13 | 5 | 5 | 1% | 1% | 5 min 26 s | 1 min 50 s |
| Embodiment 1-14 | 5 | 5 | 1% | 1% | 6 min 12 s | 1 min 42 s |
| Embodiment 1-15 | 5 | 5 | 1% | 1% | 6 min 35 s | 2 min 20 s |
| Embodiment 1-16 | 5 | 5 | 1% | 1% | 6 min 10 s | 1 min 40 s |
| Embodiment 1-17 | 5 | 5 | 1% | 1% | 5 min 27 s | 1 min 53 s |
| Embodiment 1-18 | 5 | 5 | 1% | 1% | 6 min 5 s | 2 min 32 s |
| Embodiment 1-19 | 5 | 5 | 1% | 1% | 6 min 27 s | 2 min 50 s |
| Embodiment 1-20 | 5 | 5 | 1% | 1% | 6 min 30 s | 2 min 52 s |
| Embodiment 1-21 | 5 | 5 | 1% | 1% | 5 min 12 s | 1 min 52 s |
| Embodiment 1-22 | 5 | 5 | 1% | 1% | 4 min 31 s | 1 min 28 s |
| Embodiment 1-23 | 1 | 5 | 1% | 1% | 5 min 52 s | 1 min 35 s |
| Embodiment 1-24 | 2 | 5 | 1% | 1% | 6 min 3 s | 1 min 42 s |
| Embodiment 1-25 | 6 | 5 | 1% | 1% | 6 min 48 s | 2 min 33 s |
| Embodiment 1-26 | 9 | 5 | 1% | 1% | 5 min 56 s | 1 min 41 s |
| Embodiment 1-27 | 10 | 5 | 1% | 1% | 5 min 40 s | 1 min 28 s |
| Embodiment 1-28 | 5 | 1 | 1% | 1% | 6 min 19 s | 2 min 5 s |
| Embodiment 1-29 | 5 | 2 | 1% | 1% | 6 min 23 s | 2 min 10 s |
| Embodiment 1-30 | 5 | 4 | 1% | 1% | 6 min 31 s | 2 min 20 s |
| Embodiment 1-31 | 5 | 6 | 1% | 1% | 6 min 41 s | 2 min 29 s |
| Embodiment 1-32 | 5 | 9 | 1% | 1% | 6 min 22 s | 2 min 11 s |
| Embodiment 1-33 | 5 | 10 | 1% | 1% | 5 min 50 s | 1 min 48 s |
| Embodiment 1-34 | 5 | 15 | 1% | 1% | 5 min 44 s | 1 min 40 s |
| Embodiment 1-35 | 5 | 5 | 0.50% | 0.50% | 5 min 45 s | 1 min 32 s |
| Embodiment 1-36 | 5 | 5 | 4% | 4% | 5 min 40 s | 1 min 28 s |
| Embodiment 1-37 | 5 | 5 | 1% | 1% | 3 min 50 s | 56 s |
| Embodiment 1-38 | 5 | 5 | 1% | 1% | 4 min 26 s | 1min2s |
| Embodiment 1-39 | 5 | 5 | 1% | 1% | 3 min 2 s | 52 s |
| Embodiment 1-40 | 5 | 5 | 1% | 1% | 3 min 48 s | 1 min |
| Comparative Embodiment 1 | 5 | 5 | 1% | 1% | 2 min 35 s | 45 s |
| Comparative Embodiment 2 | 5 | 5 | 1% | 1% | 2 min 48 s | 49 s |
| Comparative Embodiment 3 | 5 | 5 | 1% | 1% | 2 min 46 s | 46 s |

**Table 2**

| Group | 0 °C 0.5C discharge time | 0 °C 1C discharge time |
|---|---|---|
| Embodiment 1-41 | 6 min 45 s | 2 min 32 s |
| Embodiment 1-42 | 6 min 27 s | 2 min 15 s |
| Embodiment 1-43 | 6 min 43 s | 2 min 30 s |

As can be seen from Embodiments 1-1 to 1-11 and Comparative Embodiments 1 to 3, by controlling the cobalt contents y1 and y2 in the two groups of lithium nickel cobalt manganese oxide ternary materials to fall within the ranges specified herein, this application increases the discharge time of the secondary battery discharged at a low temperature of 0 °C and at a rate of 1C and a rate of 0.5C separately, indicating improved discharge performance of the lithium-ion battery at a low temperature and a low SOC. Based on the discharge times of discharging at a low temperature of 0 °C and at a rate of 1C and a rate of 0.5C separately in Embodiments 1-1 to 1-11, it can be seen that the cobalt contents y1 and y2 are optimal when falling within preferred ranges.

Based on the total mass of the positive active material, the mass percentage of the two groups of lithium nickel cobalt manganese oxide ternary materials affects the low-temperature discharge performance of the secondary battery. As can be seen from Embodiment 1-1, Embodiments 1-12 to 1-16, and Embodiments 1-37 and 1-38, in the case that the first group of lithium nickel cobalt manganese oxide ternary materials is located in the first positive electrode material layer and the second group of lithium nickel cobalt manganese oxide ternary materials is located in the second positive electrode material layer, by controlling the mass percentage a1 and the mass percentage b1 of the two groups of lithium nickel cobalt manganese oxide ternary materials in the first positive electrode material layer and the second positive electrode material layer to satisfy 5% ≤ a1 ≤ 70% and 30% ≤ b1 ≤ 95%, this application increases the discharge time of the secondary battery discharged at a low temperature of 0 °C and at rate of 1C and a rate of 0.5C separately, indicating improved discharge performance of the lithium-ion battery at a low temperature and a low SOC. As can be seen from Embodiments 1-12 to 1-16, the discharge time assumes a tendency to increase first and then decrease with the increase of a1 among the mass percentage a1 and the mass percentage b1 of the two groups of lithium nickel cobalt manganese oxide ternary materials. This indicates that the mass percentage a1 and the mass percentage b1 of the lithium nickel cobalt manganese oxide ternary materials preferably fall within the ranges of 25% ≤ a1 ≤ 65% and 35% ≤ b1 ≤ 75%. Further, 40% ≤ a1 ≤ 60% and 40% ≤ b1 ≤ 60%.

As can be seen from Embodiment 1-1, Embodiments 1-17 to 1-22, and Embodiments 1-39 and 1-40, in the case that the second group of lithium nickel cobalt manganese oxide ternary materials is located in the first positive electrode material layer and the first group of lithium nickel cobalt manganese oxide ternary materials is located in the second positive electrode material layer, by controlling the mass percentage a2 and the mass percentage b2 of the two groups of lithium nickel cobalt manganese oxide ternary materials in the first positive electrode material layer and the second positive electrode material layer to satisfy 25% ≤ a2 ≤ 95% and 5% ≤ b2 ≤ 75%, this application increases the discharge time of the secondary battery discharged at a low temperature of 0 °C and at rate of 1C and a rate of 0.5C separately, indicating improved discharge performance of the lithium-ion battery at a low temperature and a low SOC. As can be seen from Embodiments 1-17 to 1-22, the discharge time assumes a tendency to increase first and then decrease with the increase of a2 among the mass percentage a2 and the mass percentage b2 of the two groups of lithium nickel cobalt manganese oxide ternary materials. This indicates that the mass percentage a2 and the mass percentage b2 of the lithium nickel cobalt manganese oxide ternary materials preferably fall within the ranges of 35% ≤ a2 ≤ 80% and 20% ≤ b2 ≤ 65%. Further, 45% ≤ a2 ≤ 65% and 35% ≤ b2 ≤ 55%.

The particle diameters of the two groups of lithium nickel cobalt manganese oxide ternary materials affect the low-temperature discharge performance of the secondary battery. As can be seen from Embodiment 1-1 and Embodiments 1-23 to 1-34 versus Comparative Embodiment 1, by controlling the particle diameters D_{V1}50 and D_{V2}50 of the two groups of lithium nickel cobalt manganese oxide ternary materials to fall within the ranges specified herein, this application increases the discharge time of the secondary battery discharged at a low temperature of 0 °C and at a rate of 1C and a rate of 0.5C separately, indicating improved discharge performance of the lithium-ion battery at a low temperature and a low SOC. As can be seen from the discharge time of the battery discharged at a low temperature of 0 °C and at a rate of 1C and a rate of 0.5C in Embodiment 1-1 and Embodiments 1-23 to 1-34, the particle diameter Dᵥ₁50 of the lithium nickel cobalt manganese oxide ternary material produces a relatively great impact on the discharge time while the impact of D_{V2}50 is relatively small, indicating that the particle diameters of the nickel cobalt manganese ternary materials are optimal when falling within preferred ranges.

The content of the conductive agent affects the low-temperature discharge performance of the secondary battery. As can be seen from Embodiment 1-1 and Embodiments 1-35 and 1-36 versus Comparative Embodiment 1, by controlling the content of the conductive agent to fall within the range specified herein, this application increases the discharge time of the secondary battery discharged at a low temperature of 0 °C and at a rate of 1C and a rate of 0.5C separately, indicating improved discharge performance of the lithium-ion battery at a low temperature and a low SOC.

The secondary batteries prepared by mixing two or more lithium nickel cobalt manganese oxide ternary materials are shown in Table 2. As can be seen from Embodiment 1-1 and Embodiments 1-41 to 1-43 versus Comparative Embodiment 1, by controlling the types and contents of two or more lithium nickel cobalt manganese oxide ternary materials to fall within the ranges specified herein, this application increases the discharge time of the secondary battery discharged at a low temperature of 0 °C and at a rate of 1C and a rate of 0.5C separately. In Embodiment 1-41 versus Embodiment 1-1, a group of ternary materials with a high cobalt content (0.15 ≤ y ≤ 0.60) is added in Embodiment 1-41. The increased cobalt content lowers the discharge voltage plateau and alleviates the material impedance, resulting in improved discharge performance. In Embodiment 1-42 versus Embodiment 1-1, a group of ternary materials with a low cobalt content (0 < y ≤ 0.14) is added in Embodiment 1-42, thereby lowering the discharge voltage, but alleviates the material impedance to a lesser extent, thereby affecting the discharge performance to some extent. In Embodiment 1-43 versus Embodiment 1-1, both a group of ternary materials with a high cobalt content and a group of ternary materials with a low cobalt content are added in Embodiment 1-43, thereby increasing the cobalt content, and alleviating the material impedance while lowering the discharge voltage plateau, and consequently improving the discharge performance.

The embodiments described above are merely preferred embodiments of this application, but are not intended to limit this application. Any and all modifications, equivalent replacements, improvements, and the like made without departing from the concept and principles of this application still fall within the protection scope of this application.

## Claims

1. An electrochemical device, comprising a positive electrode plate, wherein the positive electrode plate comprises a current collector and a positive electrode material layer located on at least one surface of the current collector in a thickness direction of the current collector; the positive electrode material layer comprises a first positive electrode material layer and a second positive electrode material layer; the second positive electrode material layer is located between the first positive electrode material layer and the current collector; the positive electrode material layer comprises a positive active material; the positive active material comprises two or more lithium nickel cobalt manganese oxide ternary materials; the two or more lithium nickel cobalt manganese oxide ternary materials are divided into two groups, with a first group of lithium nickel cobalt manganese oxide ternary materials being represented by a chemical formula Liₙ₁Niₓ₁Co_{y1}Mn_{z1}M1ₘ₁O₂, satisfying x1 + yl + zl + m1 = 1 and 0.15 ≤ y1 ≤ 0.60, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14; the two groups of lithium nickel cobalt manganese oxide ternary materials are located in the first positive electrode material layer and the second positive electrode material layer respectively.

2. The electrochemical device according to claim 1, wherein materials of M1 and M2 each are independently at least one selected from Ag, Sn, Zn, Al, Mo, Cu, B, Ti, or Fe.

3. The electrochemical device according to claim 1, wherein 0.15 ≤ y1 ≤ 0.45, and 0.02 < y2 ≤ 0.08.

4. The electrochemical device according to claim 1, wherein the first group of lithium nickel cobalt manganese oxide ternary materials is located in the first positive electrode material layer; the second group of lithium nickel cobalt manganese oxide ternary materials is located in the second positive electrode material layer; based on a total mass of the lithium nickel cobalt manganese oxide ternary materials, a mass percentage of the first group of lithium nickel cobalt manganese oxide ternary materials is al, and a mass percentage of the second group of lithium nickel cobalt manganese oxide ternary materials is b1, 5% ≤ a1 ≤ 70%, and 30% ≤ b1 ≤ 95%.

5. The electrochemical device according to claim 4, wherein 25% ≤ a1 ≤ 65%, and 35% ≤ b1 ≤ 75%.

6. The electrochemical device according to claim 5, wherein 40% ≤ a1 ≤ 60%, and 40% ≤ b1 ≤ 60%.

7. The electrochemical device according to claim 1, wherein the second group of lithium nickel cobalt manganese oxide ternary materials is located in the first positive electrode material layer; the first group of lithium nickel cobalt manganese oxide ternary materials is located in the second positive electrode material layer; based on a total mass of the lithium nickel cobalt manganese oxide ternary materials, a mass percentage of the first group of lithium nickel cobalt manganese oxide ternary materials is a2, and a mass percentage of the second group of lithium nickel cobalt manganese oxide ternary materials is b2, 25% ≤ a2 ≤ 95%, and 5% ≤ b2 ≤ 75%.

8. The electrochemical device according to claim 7, wherein 35% ≤ a2 ≤ 80%, and 20% ≤ b2 ≤ 65%.

9. The electrochemical device according to claim 8, wherein 45% ≤ a2 ≤ 65%, and 35% ≤ b2 ≤ 55%.

10. The electrochemical device according to claim 1, wherein a coating weight of the positive electrode material layer is 6 mg/cm² to 11 mg/cm².

11. The electrochemical device according to claim 1, wherein a particle diameter of the first group of lithium nickel cobalt manganese oxide ternary materials is D_{V1}50, 1 µm ≤ D_{V1}50 ≤ 10 µm.

12. The electrochemical device according to claim 11, wherein 2 µm ≤ D_{V1}50 ≤ 9 µm.

13. The electrochemical device according to claim 1, wherein a particle diameter of the second group of lithium nickel cobalt manganese oxide ternary materials is D_{V2}50, 1 µm ≤ D_{V2}50 ≤ 15 µm.

14. The electrochemical device according to claim 13, wherein 2 µm ≤ D_{V2}50 ≤ 10 µm.

15. The electrochemical device according to claim 1, wherein 0.95 ≤ n1 ≤ 1.05, 0.3 ≤ x1 ≤ 0.84, 0.01 ≤ z1 ≤ 0.7, 0 ≤ m1 ≤ 0.2; 0.95 ≤ n2 ≤ 1.05, 0.3 ≤ x2 ≤ 0.9, 0.01 ≤ z2 ≤ 0.7, and 0 ≤ m2 ≤ 0.2.

16. The electrochemical device according to claim 1, wherein the positive active material comprises two lithium nickel cobalt manganese oxide ternary materials NCM-1 and NCM-2, NCM-1 satisfies 0.15 ≤ y ≤ 0.60, and NCM-2 satisfies 0 < y ≤ 0.14.

17. The electrochemical device according to claim 1, wherein, based on a mass of the positive electrode material layer, a mass percentage of the lithium nickel cobalt manganese oxide ternary material is 90% to 98%.

18. The electrochemical device according to claim 1, wherein the positive electrode material layer further comprises a conductive agent and a binder; the conductive agent is made of a material comprising one or more selected from the group consisting of conductive carbon black, carbon fiber, graphene, and carbon nanotubes; and the binder is made of a material comprising one or more selected from the group consisting of polyacrylate, polyimide, polyamide, polyamide-imide, polyvinylidene fluoride, poly(styrene-co-butadiene), sodium alginate, polyvinyl alcohol, polytetrafluoroethylene, polyacrylonitrile, sodium carboxymethyl cellulose, potassium carboxymethyl cellulose, sodium hydroxymethyl cellulose, and potassium hydroxymethyl cellulose; based on a mass of the positive electrode material layer, a mass percentage of the conductive agent is 1% to 8%, and a mass percentage of the binder is 1% to 3%.

19. A method for preparing the electrochemical device according to any one of claims 1 to 18, comprising:
preparing the positive electrode plate: dividing the two groups of lithium nickel cobalt manganese oxide ternary materials into two groups of positive active materials, with a first group of lithium nickel cobalt manganese oxide ternary materials being represented by a chemical formula Liₙ₁Niₓ₁Co_{y1}Mn_{z1}M1ₘ₁O₂, satisfying x1 + y1 + z1 + m1 = 1 and 0.15 ≤ y1 ≤ 0.60, with a second group of lithium nickel cobalt manganese oxide ternary materials being represented by a chemical formula Liₙ₂Niₓ₂Co_{y2}Mn_{z2}M2ₘ₂O₂, satisfying x2 + y2 + z2 + m2 = 1 and 0 < y2 ≤ 0.14; and disposing the two groups of positive active materials into the first positive electrode material layer and the second positive electrode material layer respectively to obtain the positive electrode plate.

20. An electronic device, wherein the electronic device comprises the electrochemical device according to any one of claims 1 to 18.
